# EUROPEAN PATENT APPLICATION

(11) **EP 4 813 803 A1**
(43) Date of publication of application: **30.09.2026**
(21) Application number: 26167860.1
(22) Date of filing: 26.03.2026
(51) Int. Cl.: B62D 5/04, B62D 3/02, B62D 1/20

(54) **STEERING SYSTEM AND METHOD FOR MANUFACTURING A PLURALITY OF STEERING SYSTEMS**

(30) Priority: 28.03.2025 LU 600846
(71) Applicant: Nabtesco Corporation, Tokyo 102-0093 (JP)
(72) Inventor: Thorn, Tobias, 56370 Dörsdorf (DE)
(74) Representative: Hoffmann, Jürgen

(57) **Abstract**

The invention relates to a steering system (1) consisting of steering system components including at least one electric motor (2), and a steering gear device (3) having a first steering gear input shaft (4) couplable to a steering shaft and a second steering gear input shaft (5) drivably coupled to the electric motor (2), and having a steering gear output shaft (6), and a steering gear device housing (7) which has fastening elements (8) for fastening the steering gear device housing (7) to a higher-level structure, in particular a vehicle body. The steering system (1) is characterized in that the steering gear device housing (7) is designed such that, with this housing (7), a steering system (1) that is mirror-symmetrical to the steering system (1) with respect to a mirror plane, in particular a vertical mirror plane, at least with regard to the arrangement and orientation of the first and second steering gear input shafts (4, 5), the steering gear output shaft (6), and the fastening elements (8), can be manufactured.

## Description

The invention relates to a steering system consisting of steering system components including at least one electric motor, and a steering gear device having a first steering gear input shaft couplable to a steering shaft and a second steering gear input shaft drivably coupled to the electric motor, and having a steering gear output shaft, and a steering gear device housing which has fastening elements for fastening the steering gear device housing to a higher-level structure, in particular a vehicle body.

The invention further relates to a method for manufacturing a plurality of steering systems.

A power steering system is known from DE 20 2014 101 670 U1. The power steering system has a steering wheel shaft on which a first worm screw and a worm wheel are arranged coaxially. The power steering system further has an auxiliary force shaft on which a second worm screw meshing with the worm wheel is arranged coaxially. The power steering system additionally has a segment shaft with a gear segment which meshes with the first worm screw.

A steering gear for an electromechanical steering system for a vehicle is known from DE 10 2019 127 965 A1. The steering gear has an input shaft couplable or coupled to a steering column of the steering system, a segment shaft couplable or coupled to a pitman arm of the steering system, an angular gear, a servo gear, and an electric motor for driving the servo gear. The angular gear is designed as a bevel gear. The input shaft and the electric motor are connected to the servo gear. The servo gear is connected to the angular gear. The angular gear is connected to the segment shaft. The angular gear is configured to transmit torque from the servo gear to the segment shaft via two transmission paths.

A power steering system of a non-track-bound motor vehicle designed as a recirculating ball steering system is known from DE 102 34 596 B3. To increase the variability of the recirculating ball steering system, a servo motor designed as an electric motor is arranged at a steering gear input to reduce steering hand forces.

A commercial vehicle steering system is known from DE 102015217045 A1, which comprises a steering gear for transmitting a manual torque applied at a steering wheel to a pitman arm. The steering gear has an electric motor for providing an auxiliary torque for steering assistance, wherein the steering assistance is provided exclusively electrically over the entire operating range of the steering system. The steering gear further has an input shaft and an output shaft whose axes of rotation are skewed relative to one another. The steering gear further has a first gear device which couples the input shaft to the output shaft, and a second gear device to which the electric motor is connected on the input side. The second gear device is coupled on the output side to the output shaft, and a reduction gear stage of the gear device is arranged coaxially with the output shaft.

It is the object of the present invention to provide a steering system of the type mentioned at the outset which can be configured in a simple manner both as a steering system for a right-hand-drive vehicle and as a steering system for a left-hand-drive vehicle.

The object is achieved by a steering system which is characterized in that the steering gear device housing is designed such that, with this housing, a steering system that is mirror-symmetrical to the steering system with respect to a mirror plane, in particular a vertical mirror plane, at least with regard to the arrangement and orientation of the first and second steering gear input shafts, the steering gear output shaft and the fastening elements, can be manufactured.

The steering system according to the invention makes it possible, in a simple manner and using identical parts, to realize a mirror-symmetrical steering system, which simplifies adaptation to different vehicle variants, in particular for left-hand-drive and right-hand-drive vehicles, without requiring complex redesigns. This leads to more efficient production and reduces both development and manufacturing costs.

The fastening elements of the steering gear device housing may, for example, be designed as through-openings or as threaded bores for fastening screws.

In a particular embodiment, the torque path from the first steering gear input shaft to the steering gear output shaft has at least two gear stages drivably connected in series. In particular, at least one of the gear stages may advantageously be designed as a strain wave gear, a cycloidal gear, an RV gear, or a bevel gear. It is also advantageously possible that at least one of the gear stages is designed as a worm gear, a spindle gear, or a crossed helical gear.

A crossed helical gear is to be understood as a gear having two helically toothed gears which are in direct meshing engagement with one another and whose axes of rotation are skewed relative to one another. In particular, the axis of rotation of one of the gears may lie in a plane whose surface normal is parallel to the axis of rotation of the other gear. It may advantageously be provided that the following applies to both helically toothed gears: L < D π sin β, wherein L is the axial length of the gear, D is the root circle diameter of the helical toothing, π is the mathematical constant pi, and β is the helix angle.

An RV gear is to be understood as a gear system which includes a cycloidal gear and a preceding stage. The cycloidal gear includes at least one cycloidal disc having a cycloidal external toothing which is in engagement with roller pins arranged along a circumferential circle. The movement of the cycloidal disc is generated by a plurality of eccentric shafts which are arranged eccentrically and are each rotatably mounted about their own axis. Each eccentric shaft carries a gear having an external toothing which is in meshing engagement with a centrally arranged drive gear. The gears of the eccentric shafts and the drive gear are components of the preceding stage. The drive gear transmits its rotary motion to the gears of the eccentric shafts, whereby the eccentric shafts drive the cycloidal disc into a wobbling motion in which the cycloidal disc rolls circumferentially along the circumferential circle of the roller pins.

In a particularly advantageous embodiment, all steering system components are designed such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured. A particular advantage of this embodiment is the possibility of using identical parts. Since all steering system components are designed such that they can be used in a mirror-symmetrical manner, the need for different components for left-hand-drive and right-hand-drive vehicles is eliminated. This leads to a reduction in the number of variants, as a result of which both production and logistics costs can be significantly reduced. By using identical parts, economies of scale can additionally be utilized in manufacturing, which reduces production costs. Assembly is also simplified, since the same assembly can be used irrespective of the installation orientation. At the same time, serviceability is improved, since fewer different components need to be kept in stock for spare parts supply.

Alternatively, in an embodiment which includes worms, spindles and/or helically toothed gears, for example as components of a gear stage designed as a worm gear, a spindle gear or a crossed helical gear, the steering system components may be designed such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured when all worms, spindles and helically toothed gears are replaced by identical ones having an opposite helix direction. Such an embodiment likewise largely has the advantage of using identical parts.

Whether it is necessary to replace worms, spindles and helically toothed gears by identical ones having an opposite helix direction depends on how the remaining part of the steering system and the connection of the steering system within the remaining steering components of the right-hand-drive and left-hand-drive vehicles are configured.

In a particularly advantageous embodiment, a first of the gear stages is designed as a bevel gear, a worm gear, a spindle gear, a crossed helical gear or a strain wave gear, while a second gear stage which is drivably connected downstream of the first gear stage is designed as a cycloidal gear, an RV gear or a strain wave gear. By combining different types of gears in two successive stages, several decisive advantages are achieved for the steering system. A substantial advantage is that the required transmission ratio can be achieved with a very compact structural design. Such an embodiment enables space-saving integration into a vehicle, which is of particular advantage in commercial vehicles with limited installation space. In addition, the mechanical coupling interfaces of the steering system can be optimally arranged and oriented, so that simple and space-saving installation in the vehicle is enabled. Such an embodiment facilitates integration into different vehicle platforms.

In an advantageous embodiment of the steering system, the electric motor is coupled to the second steering gear input shaft by means of a transmission gear device. This allows adaptation of the rotational speed and torque of the motor to the requirements of the steering system.

A particularly advantageous embodiment is one in which the transmission gear device is designed as a traction mechanism gear or comprises such a gear. A traction mechanism gear, for example in the form of a toothed belt drive or a chain drive, enables low-noise and low-vibration power transmission. In addition, a traction mechanism gear allows positioning of the electric motor relative to the steering gear device in a manner that is particularly advantageous for utilizing the installation space available in a vehicle.

Alternatively, the transmission gear device may be designed as a spur gear or may comprise such a gear. In order to be able to realize an advantageous transmission ratio with a compact structural design, the spur gear may advantageously comprise three spur gears.

A further advantageous embodiment provides that the transmission gear device is designed as a strain wave gear or comprises such a gear. A strain wave gear likewise enables an extremely compact structural design and, due to its backlash-free power transmission, offers particularly high steering precision.

In particular, the steering system may, for example by means of the above-described advantageous embodiments of the transmission gear device, be designed such that the motor is arranged offset, in particular axis-parallel offset, relative to the second gear stage and/or relative to the steering gear output shaft. This arrangement enables a space-saving design and allows flexible integration of the motor into the installation space of the vehicle.

Alternatively, the steering system may be designed such that the motor is arranged coaxially with the second gear stage. This design ensures direct and low-loss power transmission, whereby the efficiency of the system is increased. In addition, a particularly radially compact unit is obtained, which enables simple installation and maintenance.

The steering gear device housing may advantageously be of multi-part design. A multi-part design of the steering gear device housing enables simpler assembly. A multi-part design of the steering gear device housing also enables easier maintenance, since the enclosed steering system components are more easily accessible.

A particularly advantageous embodiment is one in which the steering gear device housing accommodates at least the gear stages drivably connected in series. This protects the steering system components of the gear stages from external influences such as dust, moisture or mechanical loads and thus contributes to the longevity and reliability of the steering system.

In addition, the steering gear device housing may accommodate the transmission gear device. This ensures optimum protection against contamination and mechanical influences.

A particularly advantageous embodiment provides that the steering gear device housing, in particular in an opening of its housing wall, comprises at least one input shaft bearing receptacle for a steering gear input shaft bearing. In the input shaft bearing receptacle, a steering gear input shaft bearing for rotatably supporting the steering gear input shaft may be arranged. This enables stable bearing of the steering gear input shaft. The steering gear input shaft bearing may advantageously be designed as a rolling bearing, in particular as a ball bearing, a roller bearing or an angular contact roller bearing.

A particularly advantageous embodiment is one in which the steering gear device housing, in addition to the input shaft bearing receptacle, comprises a further input shaft bearing receptacle which is arranged mirror-symmetrically to the first input shaft bearing receptacle with respect to a horizontal mirror plane. In the input shaft bearing receptacle, a steering gear input shaft bearing for supporting the steering gear input shaft may be arranged. This symmetrical design facilitates production and enables cost-effective realization of left-hand-drive and right-hand-drive variants with regard to the rotational bearing of the steering gear input shaft.

In particular, it may advantageously be provided that, depending on whether a steering system for a right-hand-drive vehicle or a steering system for a left-hand-drive vehicle is to be manufactured, the steering gear input shaft bearing is inserted either into the input shaft bearing receptacle or into the further input shaft bearing receptacle. Preferably, the further input shaft bearing receptacle is closed with a cover when the steering gear input shaft bearing is inserted into the input shaft bearing receptacle. Conversely, the input shaft bearing receptacle is preferably closed with a cover when the steering gear input shaft bearing is inserted into the further input shaft bearing receptacle. The cover is preferably designed such that it can be removed without destruction, for example for maintenance purposes.

Alternatively, it may advantageously be provided that a steering gear input shaft bearing is inserted both into the input shaft bearing receptacle and into the further input shaft bearing receptacle in order to securely rotatably support the first steering gear input shaft. Depending on whether a steering system for a right-hand-drive vehicle or a steering system for a left-hand-drive vehicle is to be manufactured, the steering gear input shaft then projects either through the opening of the input shaft bearing receptacle or through the opening of the further input shaft bearing receptacle out of the steering gear device housing. The opening of the respective other input shaft bearing receptacle is preferably closed with a cover.

The steering gear device housing may advantageously comprise an output shaft bearing receptacle for a steering gear output shaft bearing, whereby precise rotational bearing of the steering gear output shaft is enabled. In the output shaft bearing receptacle, a steering gear output shaft bearing may be arranged.

A particularly advantageous embodiment is one in which the steering gear device housing, in addition to the output shaft bearing receptacle, comprises a further output shaft bearing receptacle which is arranged mirror-symmetrically to the first output shaft bearing receptacle with respect to a mirror plane. In the output shaft bearing receptacle, a steering gear output shaft bearing for supporting the steering gear output shaft may be arranged. This symmetrical design facilitates production and enables cost-effective realization of left-hand-drive and right-hand-drive variants with regard to the rotational bearing of the steering gear output shaft.

In particular, it may advantageously be provided that, depending on whether a steering system for a right-hand-drive vehicle or a steering system for a left-hand-drive vehicle is to be manufactured, the steering gear output shaft bearing is inserted either into the output shaft bearing receptacle or into the further output shaft bearing receptacle. Preferably, the further output shaft bearing receptacle is closed with a cover when the steering gear output shaft bearing is inserted into the output shaft bearing receptacle. Conversely, the output shaft bearing receptacle is preferably closed with a cover when the steering gear output shaft bearing is inserted into the further output shaft bearing receptacle. The cover is preferably designed such that it can be removed without destruction, for example for maintenance purposes.

A particularly advantageous embodiment is one in which the distance of a plane perpendicular to the steering gear output shaft, in which the axis of rotation of the first steering gear input shaft is arranged, from the plane in which the portion of the outer side of the steering gear device housing directly surrounding the output shaft bearing receptacle is arranged, lies in the range from 70 mm to 90 mm or in particular amounts to 80 mm. These dimensions enable a good balance between compactness, structural stability and utilization of the available installation space.

The steering system may advantageously be designed such that the axes of rotation of the first steering gear input shaft and the steering gear output shaft are skewed relative to one another. This arrangement allows particularly efficient utilization of the installation space and integration into a vehicle. In particular, the axes of rotation of the first steering gear input shaft and the steering gear output shaft may additionally be arranged in planes perpendicular to one another, which enables particularly efficient utilization of the installation space and integration into a vehicle. A particularly advantageous embodiment is one in which the axes of rotation of the first steering gear input shaft and the steering gear output shaft have a spacing of 80 mm to 100 mm, in particular 90 mm.

A particularly advantageous steering arrangement comprises a steering system according to the invention and a steering shaft which is operatively connected to a steering handle, wherein the steering shaft is, preferably directly, coupled to the first steering gear input shaft or is manufactured integrally therewith.

A particularly advantageous vehicle, in particular a commercial vehicle, very particularly a truck or a bus, comprises a steering system according to the invention or a steering arrangement according to the invention.

A particularly advantageous method according to the invention for manufacturing a plurality of steering systems initially provides steering system components. These include in particular a plurality of identical electric motors, a plurality of steering gear devices and a plurality of steering gear device housings. The steering gear devices each include a first steering gear input shaft couplable to a steering shaft and a second steering gear input shaft drivably coupled or couplable to the electric motor, and a steering gear output shaft. The steering gear device housings each have fastening elements for fastening the steering gear device housing to a higher-level structure, in particular a vehicle body, wherein the steering gear device housings are designed such that, with each of these housings, a steering system that is mirror-symmetrical to the steering system with respect to a mirror plane, in particular a vertical mirror plane, at least with regard to the arrangement and orientation of the first and second steering gear input shafts, the steering gear output shaft and the fastening elements, can be manufactured. According to the invention, the steering gear device housings are designed such that both steering systems for right-hand-drive vehicles and steering systems for left-hand-drive vehicles can be manufactured with them.

A particularly advantageous embodiment is one in which the steering systems for left-hand-drive vehicles and right-hand-drive vehicles are assembled completely from identical steering system components. This leads to a significant reduction in the number of parts and thus to cost savings in production and logistics. By standardizing the components, inventory management is also simplified and complexity in assembly is reduced.

In a further advantageous embodiment, the steering systems for left-hand-drive vehicles and right-hand-drive vehicles may likewise consist of the same components, with the exception that worms, spindles or helically toothed gears having an opposite helix direction are used.

As already mentioned above, it may advantageously be provided that, depending on whether a steering system for a right-hand-drive vehicle or a steering system for a left-hand-drive vehicle is to be manufactured, a steering gear input shaft bearing for the rotational bearing of the steering gear input shaft is inserted either into an input shaft bearing receptacle or into a further input shaft bearing receptacle arranged mirror-symmetrically with respect to the input shaft bearing receptacle.

As likewise already mentioned above, it may advantageously be provided that, depending on whether a steering system for a right-hand-drive vehicle or a steering system for a left-hand-drive vehicle is to be manufactured, a steering gear output shaft bearing for the rotational bearing of the steering gear output shaft is inserted either into an output shaft bearing receptacle or into a further output shaft bearing receptacle arranged mirror-symmetrically with respect to the output shaft bearing receptacle.

In the drawing, the subject matter of the invention is illustrated by way of example and schematically and is described below with reference to the figures, wherein identical or functionally identical elements are usually provided with the same reference signs even in different embodiments. The figures show:
- Fig. 1: a first embodiment of a steering system according to the invention in a sectional view,
- Fig. 2: the first embodiment of a steering system according to the invention in a further sectional view,
- Fig. 3: the first embodiment of a steering system according to the invention in a side view,
- Fig. 4: the first embodiment of a steering system according to the invention in a perspective view,
- Fig. 5: in a front perspective view, the first embodiment of a steering system according to the invention and, in a further front perspective view, a steering system mirror-symmetrical to the steering system with respect to a mirror plane, in particular a vertical mirror plane,
- Fig. 6: in a rear perspective view, the first embodiment of a steering system according to the invention and, in a further rear perspective view, a steering system mirror-symmetrical to the steering system with respect to a mirror plane, in particular a vertical mirror plane,
- Fig. 7: in a side view, the first embodiment of a steering system according to the invention and, in a further rear side view, a steering system mirror-symmetrical to the steering system with respect to a mirror plane, in particular a vertical mirror plane,
- Fig. 8: a schematic detailed view of the crossed helical gear and the RV gear of the first embodiment of a steering system according to the invention,
- Fig. 9: a second embodiment of a steering system according to the invention in a sectional view,
- Fig. 10: the second embodiment of a steering system according to the invention in a further sectional view,
- Fig. 11: the second embodiment of a steering system according to the invention in a side view,
- Fig. 12: the second embodiment of a steering system according to the invention in a perspective view,
- Fig. 13: in a front perspective view, the second embodiment of a steering system according to the invention and, in a further front perspective view, a steering system mirror-symmetrical to the steering system with respect to a mirror plane, in particular a vertical mirror plane,
- Fig. 14: in a rear perspective view, the second embodiment of a steering system according to the invention and, in a further rear perspective view, a steering system mirror-symmetrical to the steering system with respect to a mirror plane, in particular a vertical mirror plane,
- Fig. 15: in a side view, the second embodiment of a steering system according to the invention and, in a further rear side view, a steering system mirror-symmetrical to the steering system with respect to a mirror plane, in particular a vertical mirror plane, and
- Fig. 16: a schematic detailed view of the worm gear and the RV gear of the second embodiment of a steering system according to the invention,
- Fig. 17: a schematic detailed view of an embodiment of a combination of a crossed helical gear and an RV gear for a steering system according to the invention,
- Fig. 18: a schematic detailed view of a further embodiment of a combination of a crossed helical gear and an RV gear for a mirror-symmetrical steering system according to the invention, which is mirror-symmetrical to the steering system at least with regard to the arrangement and orientation of the first and second steering gear input shafts, the steering gear output shaft and the fastening elements, for which the combination according to Fig. 17 is designed,
- Fig. 19: a third embodiment of a steering system according to the invention in a sectional view,
- Fig. 20: the third embodiment of a steering system according to the invention in a further sectional view,
- Fig. 21: the third embodiment of a steering system according to the invention in a side view,
- Fig. 22: in a front perspective view, the third embodiment of a steering system according to the invention and, in a further front perspective view, a steering system mirror-symmetrical to the steering system with respect to a mirror plane, in particular a vertical mirror plane,
- Fig. 23: in a rear perspective view, the third embodiment of a steering system according to the invention and, in a further rear perspective view, a steering system mirror-symmetrical to the steering system with respect to a mirror plane, in particular a vertical mirror plane, and
- Fig. 24: in a side view, the first embodiment of a steering system according to the invention and, in a further rear side view, a steering system mirror-symmetrical to the steering system with respect to a mirror plane, in particular a vertical mirror plane.

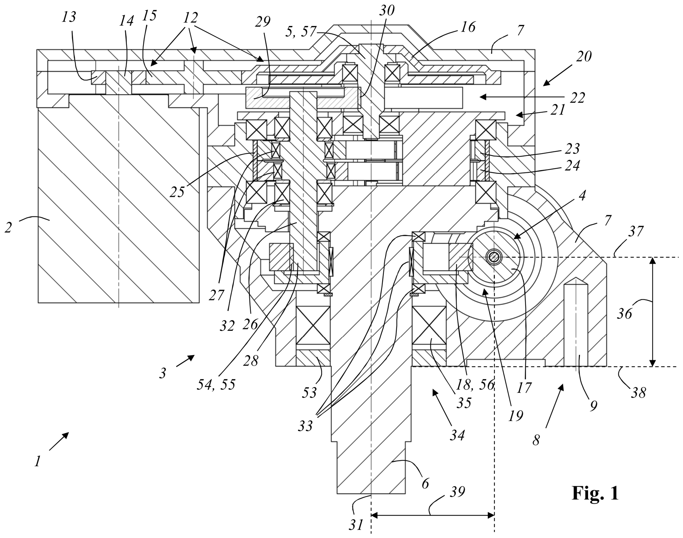

Fig. 1 shows a first embodiment of a steering system 1 according to the invention in a sectional view.

The steering system 1 consists of steering system components including an electric motor 2 and a steering gear device 3 having a first steering gear input shaft 4 couplable to a (not shown) steering shaft and a second steering gear input shaft 5 drivably coupled to the electric motor 2, and having a steering gear output shaft 6. The steering system components further include a steering gear device housing 7 which has a plurality of fastening elements 8 for fastening the steering gear device housing 7 to a higher-level structure, in particular a vehicle body. The fastening elements 8 of the steering gear device housing 7 may, for example, be designed as through-openings or as threaded bores 9 for fastening screws.

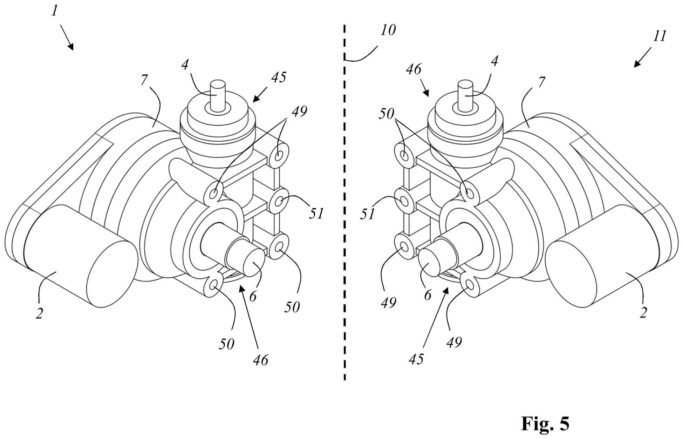

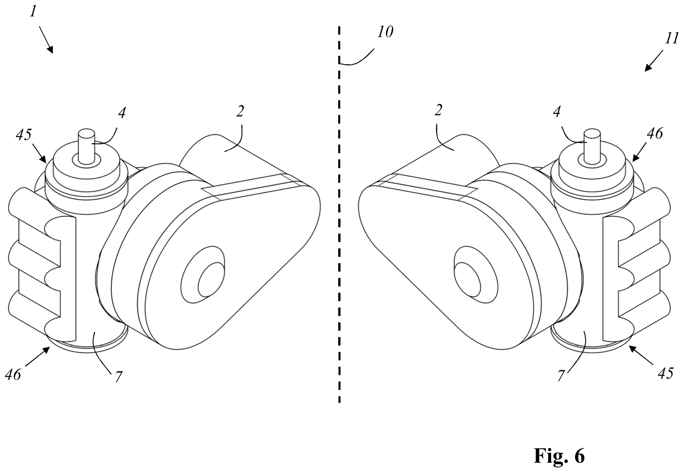

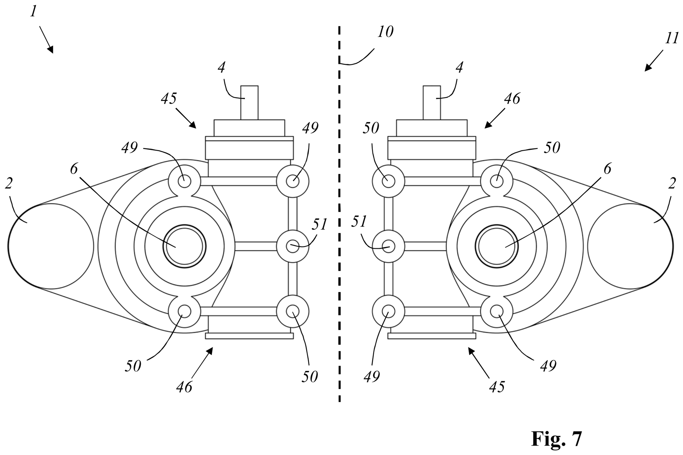

The steering gear device housing 7 is designed such that, with this housing, a steering system 11 that is mirror-symmetrical to the steering system 1 with respect to a mirror plane 10, in particular a vertical mirror plane, at least with regard to the arrangement and orientation of the first steering gear input shaft 4 and the second steering gear input shaft 5, the steering gear output shaft 6 and the fastening elements 8, can be manufactured, which is illustrated in Figs. 5 to 7 and explained in greater detail below. Specifically, in this embodiment the steering system components are designed such that, with these components, a steering system 11 that is mirror-symmetrical to the steering system 1 with respect to the mirror plane 10 with regard to the arrangement and orientation of the first steering gear input shaft 4 and the second steering gear input shaft 5, the steering gear output shaft 6 and the fastening elements 8, can be manufactured when the helically toothed gears 17, 18 of a crossed helical gear 19 accommodated in the steering gear device housing 7 are replaced by identical ones having an opposite helix direction.

The motor 2 is coupled to the second steering gear input shaft 5 by means of a transmission gear device 12. The transmission gear device 12 is designed as a spur gear and comprises a first spur gear 13 which is directly non-rotatably connected to an output shaft 14 of the motor 2. The transmission gear device 12 further comprises a rotatably mounted second spur gear 15 whose toothing is in meshing engagement with the toothing of the first spur gear 13. The transmission gear device 12 further comprises a third spur gear 16 which is directly non-rotatably connected to the second steering gear input shaft 5.

The torque path from the first steering gear input shaft 4 to the steering gear output shaft 6 comprises a plurality of gear stages drivably connected in series. A first gear stage is designed as a crossed helical gear 19, while a second gear stage which is drivably connected downstream of the first gear stage is designed as an RV gear 20.

The RV gear 20 comprises a cycloidal gear 21 and a preceding stage 22. The cycloidal gear 21 is drivably connected downstream of the motor 2 via the transmission gear device 12 and the preceding stage 22. The cycloidal gear 21 includes two cycloidal discs 23, 24, each having a cycloidal external toothing which is in engagement with roller pins 25 arranged along a circumferential circle. The movement of the cycloidal discs 23, 24 is generated by a plurality of eccentric shafts 26 which are each arranged eccentrically and are each rotatably mounted about their own axis relative to the cycloidal discs 23, 24 by means of a rolling bearing 27.

Each eccentric shaft 26 has an eccentric shaft gear 28 and a further eccentric shaft gear 29. The eccentric shaft gear 28 and the further eccentric shaft gear 29 of each eccentric shaft 26 are arranged on opposite sides of the two cycloidal discs 23, 24.

The further eccentric shaft gears 29 are components of the preceding stage 22. The centrally arranged second steering gear input shaft 5 has an external toothing 30 which is in meshing engagement with the external toothings of the further eccentric shaft gears 29. The second steering gear input shaft 5 thus functions as the drive gear 57 of the preceding stage 22 and transmits its rotary motion to the further eccentric shaft gears 29, whereby the eccentric shafts 26 drive the cycloidal discs 23, 24 into a wobbling motion in which the cycloidal discs 23, 24 roll circumferentially along the circumferential circle of the roller pins 25. In this process, the eccentric shafts 26 rotate not only about their own axes but, together with the cycloidal discs 23, 24, also about the central axis of rotation 31 of the RV gear 20. Each of the eccentric shafts 26 is coupled to the steering gear output shaft 6 via a respective further rolling bearing 32, so that the rotational movement of the cycloidal discs 23, 24 about the central axis of rotation 31 is transmitted via the eccentric shafts 26 to the steering gear output shaft 6.

In addition, each of the eccentric shafts 26 is drivably coupled to the first steering gear input shaft 4 via the crossed helical gear 19. The crossed helical gear 19 comprises a first helically toothed gear 17 which is arranged coaxially with the steering gear input shaft 4 and is indirectly non-rotatably connected thereto. The crossed helical gear 19 further comprises a second helically toothed gear 18 whose helical external toothing is in meshing engagement with the helical external toothing of the first helically toothed gear 17. The axes of rotation of the helically toothed gears 17, 18 are arranged skewed relative to one another, wherein the second helically toothed gear 18 rotates about the central axis of rotation 31 of the cycloidal gear 20.

The second helically toothed gear 18 is designed in the form of a ring and has, on its outer circumference, the helical external toothing which is in meshing engagement with the helical external toothing of the first helically toothed gear 17. Along its inner circumference, the second helically toothed gear 18 has an internal toothing 54 which is in meshing engagement with external toothings 55 of the further eccentric shaft gears 29. The second helically toothed gear 18 is rotatably mounted relative to the steering gear output shaft 6 by means of a plurality of rolling bearings 33.

Accordingly, the torque path from the first steering gear input shaft 4 to the steering gear output shaft 6 comprises a plurality of gear stages drivably connected in series. One of these gear stages is formed by the crossed helical gear 19. A further one of these gear stages is formed by the meshing engagement of the preferably straight internal toothing 54 of the second helically toothed gear 18 with the external toothings 55 of the eccentric shaft gears 28. A further one of these gear stages is formed by the cycloidal gear 21. The helically toothed gear 18 forms an intermediate gear 56 which is a component of two of the gear stages drivably connected in series.

The steering gear device housing 7 has an output shaft bearing receptacle 34 in which a steering gear output shaft bearing 35 for rotatably supporting the steering gear output shaft 6 and a seal 53 are arranged.

The distance 36 between a plane 37 perpendicular to the steering gear output shaft 6, in which the axis of rotation of the first steering gear input shaft 4 is arranged, and the plane 38 in which the portion of the outer side of the steering gear device housing 7 directly surrounding the output shaft bearing receptacle 34 is arranged, lies in the range from 70 mm to 90 mm and is preferably 80 mm.

The axes of rotation of the first steering gear input shaft 4 and the steering gear output shaft 6 are arranged in planes perpendicular to one another, which have a spacing 39 of 80 mm to 100 mm, in particular 90 mm, relative to one another.

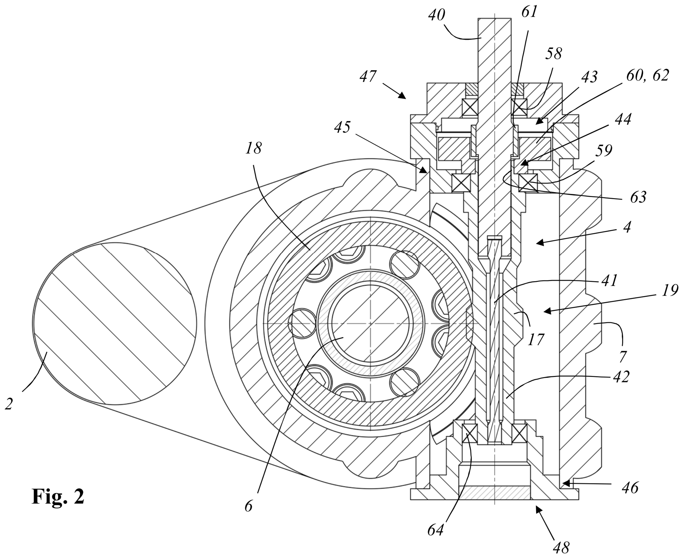

Fig. 2 shows the first embodiment of a steering system 1 according to the invention in a further sectional view.

It can be seen in Fig. 2 that the steering gear input shaft 4 comprises an input section 40 designed as a solid shaft, a middle section 41 designed as a solid shaft, and a hollow shaft section 42 which, in one section, forms the first helically toothed gear 17.

The middle section 41 is directly non-rotatably connected at one end to the input section 40 and at the other end directly non-rotatably to the hollow shaft section 42, wherein the hollow shaft section 42 surrounds the middle section 41 and a portion of the input section 40.

The steering system 1 comprises a first rotary angle sensor 43 which detects the rotational position and the rotational speed of the input section 40 of the first steering gear input shaft 4. The steering system 1 further comprises a second rotary angle sensor 44 which detects the rotational position of the portion of the hollow shaft section 42 surrounding the input section 40 of the first steering gear input shaft 4. The first rotary angle sensor 43 comprises a first sensor element 60 and a first coding element 61 which cooperates contactlessly with the first sensor element 60, for example in the form of a code disc, a toothed ring or a magnetic wheel. The second rotary angle sensor 44 comprises a second sensor element 62 and a second coding element 63 which cooperates contactlessly with the second sensor element 62, for example in the form of a code disc, a toothed ring or a magnetic wheel, wherein the first sensor element 60 and the second sensor element 62 may advantageously be arranged jointly on the same carrier and/or in the same sensor housing. In the figure, the first sensor element 60 and the second sensor element 62 are shown only very schematically together as a hatched closed polygon.

The measurement signals of the first sensor element 60 and the second sensor element 62 are transmitted to a (not shown) control device which controls the motor 2 taking the measurement signals into account. In this context, the control device can infer the current torque exerted on the first steering gear input shaft 4 by means of a (not shown) steering handle from the respective difference between the angle of rotation detected by the first sensor element 60 and the angle of rotation detected by the second sensor element 62. This is possible because the input section 40, on which the first coding element 61 is arranged, and the end of the hollow shaft section 42 directly connected to the middle section 41, on which the second coding element 63 is arranged, both belong to the first steering gear input shaft 4 but are located, in terms of the torque path, upstream and downstream of the first helically toothed gear 17 of the crossed helical gear 19. As a result, when a torque is applied, they rotate relative to one another due to torsion, in particular of the comparatively thin middle section 41, wherein the angle of rotation difference increases with increasing torque applied to the first steering gear input shaft 4 by means of the steering handle.

It may advantageously be provided that the control device controls the motor 2 at least as a function of the angle of rotation difference between the first sensor element 60 and the second sensor element 62.

The steering gear device housing 7 comprises an input shaft bearing receptacle 45 and a further input shaft bearing receptacle 46 which is arranged mirror-symmetrically to the first input shaft bearing receptacle with respect to a horizontal mirror plane. An input shaft bearing module 47 is arranged in the input shaft bearing receptacle 45 and comprises a first rolling bearing 58 and a second rolling bearing 59. The input section 40 is rotatably supported by means of the first rolling bearing 58. The end of the hollow shaft section 42 surrounding the input section 40 is rotatably supported by means of the second rolling bearing 59.

A further input shaft bearing module 48 is arranged in the further input shaft bearing receptacle 46 and comprises a rolling bearing 64. The end of the hollow shaft section 42 directly connected to the middle section 41 is rotatably supported by means of the rolling bearing 64.

The input shaft bearing module 47 and the further input shaft bearing module 48 serve in particular to securely rotatably support the first steering gear input shaft 4, wherein the first sensor element 60 and the second sensor element 62 are spatially integrated into the input shaft bearing module 47. The first steering gear input shaft 4 projects outward through the opening of the input shaft bearing receptacle 45.

If, however, instead of the steering system 1, which may be designed for a left-hand-drive vehicle, a mirror-symmetrical steering system 11 for a right-hand-drive vehicle is to be manufactured, the steering gear device housing 7 can be used in such a way that the first steering gear input shaft 4 projects outward from the steering gear device housing 7 through the opening of the further input shaft bearing receptacle 46, as illustrated in Figs. 5 to 7.

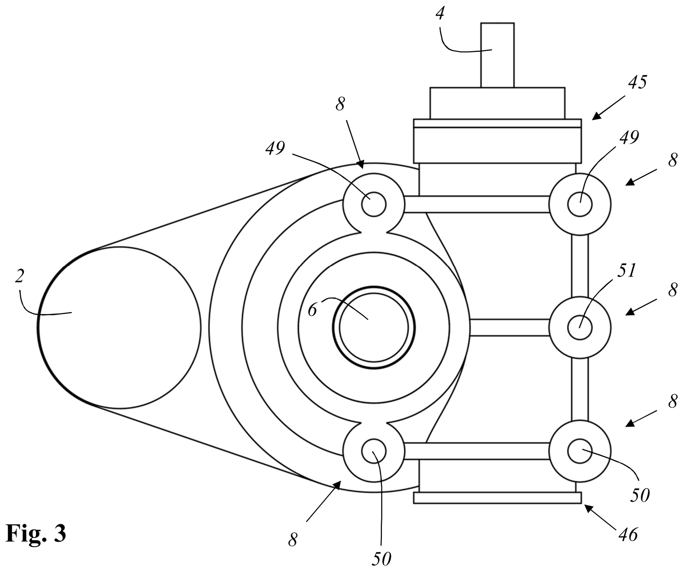

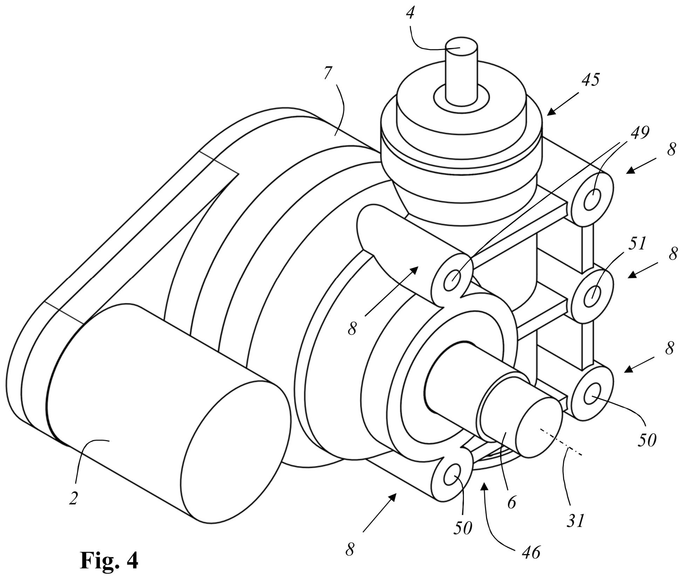

Fig. 3 shows the steering system 1 in a side view, while Fig. 4 shows the steering system 1 in a perspective view. In both figures, it can be seen that there are a total of five fastening elements 8, which may be designed as threaded bores.

There are two upper fastening elements 49, two lower fastening elements 50, and one central fastening element 51. The fastening elements 8 are arranged mirror-symmetrically with respect to a plane 52 in which the central axis of rotation 31 and the central fastening element 51 are arranged.

As illustrated by Figs. 5 to 7, the steering gear device housing 7 is designed such that, with this housing, a steering system 11 that is mirror-symmetrical to the steering system 1 with respect to a mirror plane 10, in particular a vertical mirror plane, with regard to the arrangement and orientation of the first steering gear input shaft 4 and the second steering gear input shaft 5, the steering gear output shaft 6 and the fastening elements 8, can be manufactured. While, in the steering system 1, the two upper fastening elements 49 are arranged at the top, in the mirror-symmetrical steering system 11 the two upper fastening elements 49 are arranged at the bottom. While, in the steering system 1, the two lower fastening elements 50 are arranged at the bottom, in the mirror-symmetrical steering system 11 the two lower fastening elements 50 are arranged at the top.

While the steering gear input shaft 4, in the steering system 1, projects outward through the opening of the input shaft bearing receptacle 45, the steering gear input shaft 4, in the mirror-symmetrical steering system 11, projects outward through the opening of the further input shaft bearing receptacle 46.

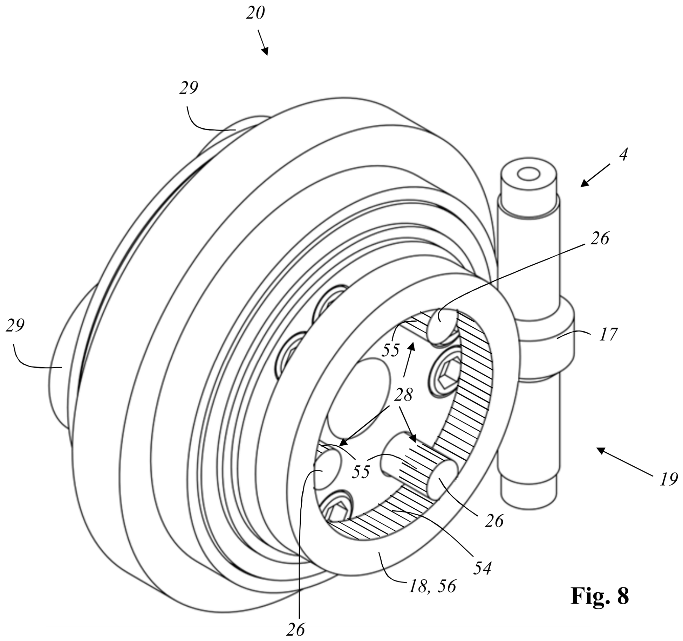

Fig. 8 shows a schematic detailed view of the crossed helical gear 19 and the RV gear 20 of the first embodiment of a steering system according to the invention, wherein the helical toothings of the first helically toothed gear 17 and the second helically toothed gear 18 are not illustrated for reasons of clarity.

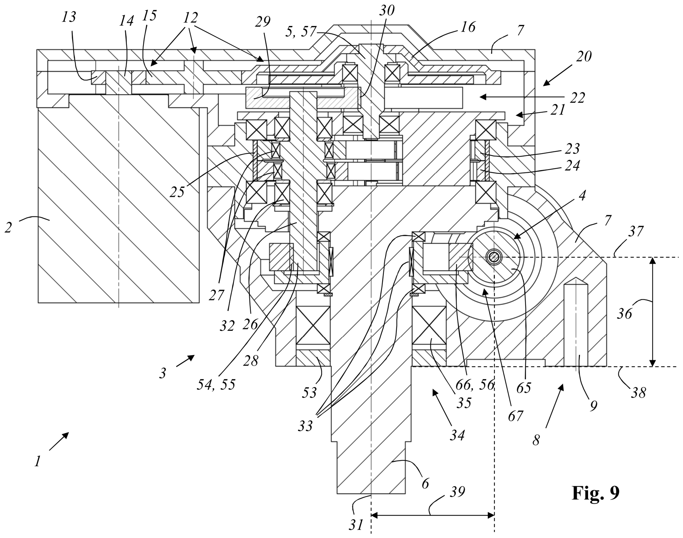

Fig. 9 shows a second embodiment of a steering system 1 according to the invention in a sectional view.

The steering system 1 consists of steering system components including at least one electric motor 2 and a steering gear device 3 having a first steering gear input shaft 4 couplable to a (not shown) steering shaft and a second steering gear input shaft 5 drivably coupled to the electric motor 2, and having a steering gear output shaft 6. The steering system components further include a steering gear device housing 7 which has a plurality of fastening elements 8 for fastening the steering gear device housing 7 to a higher-level structure, in particular a vehicle body. The fastening elements 8 of the steering gear device housing 7 may, for example, be designed as through-openings or as threaded bores 9 for fastening screws.

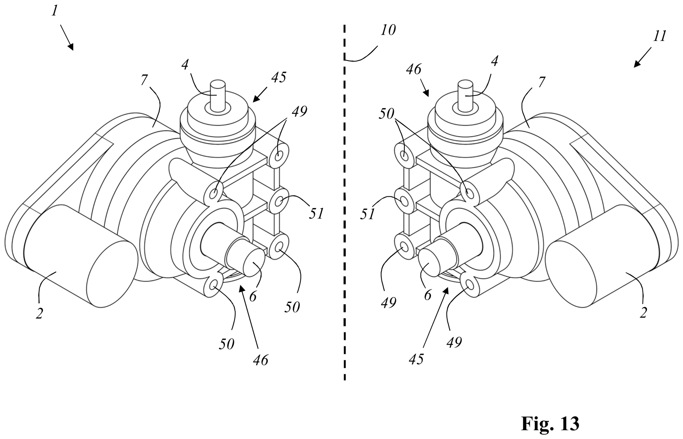

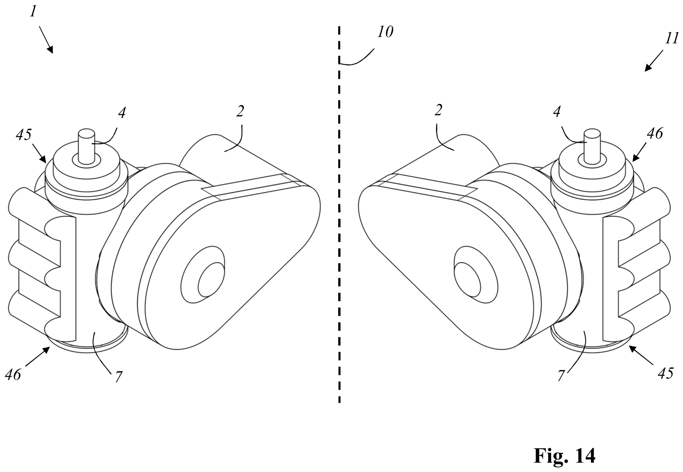

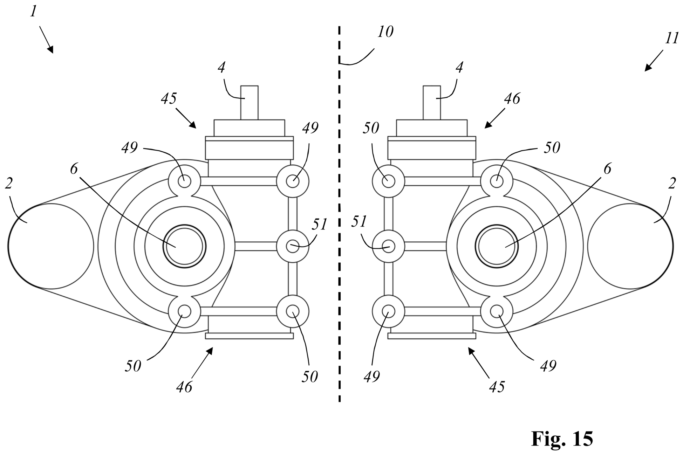

The steering gear device housing 7 is designed such that, with this housing, a steering system 11 that is mirror-symmetrical to the steering system 1 with respect to a mirror plane 10, in particular a vertical mirror plane, at least with regard to the arrangement and orientation of the first steering gear input shaft 4 and the second steering gear input shaft 5, the steering gear output shaft 6 and the fastening elements 8, can be manufactured, which is illustrated in Figs. 13 to 15 and explained in detail further below. Specifically, in this embodiment the steering system components are designed such that, with these components, a steering system 11 that is mirror-symmetrical to the steering system 1 with respect to the mirror plane 10 with regard to the arrangement and orientation of the first steering gear input shaft 4 and the second steering gear input shaft 5, the steering gear output shaft 6 and the fastening elements 8, can be manufactured when the worm shaft 65 of a worm gear 67 accommodated in the steering gear device housing 7, which in addition to the worm shaft 65 comprises a worm wheel 66, is replaced by an identical one having an opposite helix direction.

The motor 2 is coupled to the second steering gear input shaft 5 by means of a transmission gear device 12. The transmission gear device 12 is designed as a spur gear and comprises a first spur gear 13 which is directly non-rotatably connected to an output shaft 14 of the motor 2. The transmission gear device 12 further comprises a rotatably mounted second spur gear 15 whose toothing is in meshing engagement with the toothing of the first spur gear 13. The transmission gear device 12 further comprises a third spur gear 16 which is directly non-rotatably connected to the second steering gear input shaft 5.

The torque path from the first steering gear input shaft 4 to the steering gear output shaft 6 comprises a plurality of gear stages drivably connected in series. A first gear stage is designed as a crossed helical gear 19, while a second gear stage drivably connected downstream of the first gear stage is designed as an RV gear 20.

The RV gear 20 comprises a cycloidal gear 21 and a preceding stage 22. The cycloidal gear 21 is drivably connected downstream of the motor 2 via the transmission gear device 12 and the preceding stage 22. The cycloidal gear 21 includes two cycloidal discs 23, 24 each having a cycloidal external toothing which is in engagement with roller pins 25 arranged along a circumferential circle. The movement of the cycloidal discs 23, 24 is generated by a plurality of eccentric shafts 26 which are each arranged eccentrically and are each rotatably mounted about their own axis relative to the cycloidal discs 23, 24 by means of a rolling bearing 27.

Each eccentric shaft 26 has an eccentric shaft gear 28 and a further eccentric shaft gear 29. The eccentric shaft gear 28 and the further eccentric shaft gear 29 of each eccentric shaft 26 are arranged on different sides of the two cycloidal discs 23, 24.

The further eccentric shaft gears 29 are part of the preceding stage 22. The centrally arranged second steering gear input shaft 5 has an external toothing 30 which is in meshing engagement with the external toothings of the further eccentric shaft gears 29. The second steering gear input shaft 5 thus functions as the drive gear 57 of the preceding stage 22 and transmits its rotary motion to the further eccentric shaft gears 29, whereby the eccentric shafts 26 drive the cycloidal discs 23, 24 into a wobbling motion in which the cycloidal discs 23, 24 roll circumferentially along the circumferential circle of the roller pins 25, wherein the eccentric shafts 26, in addition to rotating about their own axes, rotate together with the cycloidal discs 23, 24 about the central axis of rotation 31 of the RV gear. Each of the eccentric shafts 26 is coupled to the steering gear output shaft 6 via a respective further rolling bearing 32, so that the rotational movement of the cycloidal discs 23, 24 about the central axis of rotation 31 is transmitted via the eccentric shafts 26 to the steering gear output shaft.

In addition, each of the eccentric shafts 26 is drivably coupled to the first steering gear input shaft 4 via the worm gear 67. As already mentioned, the worm gear 67 comprises a worm shaft 65 which is arranged coaxially with the steering gear input shaft 4 and is indirectly non-rotatably connected thereto. The worm gear 67 further comprises a worm wheel 66 whose external toothing is in meshing engagement with the worm shaft 65. The axes of rotation of the worm shaft 65 and of the worm wheel 66 are arranged skewed relative to one another, wherein the worm wheel 66 rotates about the central axis of rotation 31 of the cycloidal gear 20.

The worm wheel 66 is of ring-shaped design and, as already mentioned, has on its outer circumference an external toothing which is in meshing engagement with the worm shaft 65. Along its inner circumference, the worm wheel 66 has an internal toothing 54 which is in meshing engagement with the external toothings 55 of the further eccentric shaft gears 29. The worm wheel 66 is rotatably mounted relative to the steering gear output shaft 6 by means of a plurality of rolling bearings 33.

Accordingly, the torque path from the first steering gear input shaft 4 to the steering gear output shaft 6 comprises a plurality of gear stages drivably connected in series. One of these gear stages is formed by the worm gear 67. A further one of these gear stages is formed by the meshing engagement of the preferably straight internal toothing 54 of the worm wheel 66 with the external toothings 55 of the eccentric shaft gears 28. A further one of these gear stages is formed by the cycloidal gear 21. The worm wheel 66 forms an intermediate gear 56 which is a component of two of the gear stages drivably connected in series.

The steering gear device housing 7 comprises an output shaft bearing receptacle 34 in which a steering gear output shaft bearing 35 for rotationally supporting the steering gear output shaft 6 and a seal 53 are arranged.

The distance 36 between a plane 37 perpendicular to the steering gear output shaft 6, in which the axis of rotation of the first steering gear input shaft 4 is arranged, and the plane 38 in which the portion of the outer side of the steering gear device housing 7 directly surrounding the output shaft bearing receptacle 34 is arranged, lies in the range from 70 mm to 90 mm and preferably amounts to 80 mm.

The axes of rotation of the first steering gear input shaft 4 and the steering gear output shaft 6 are arranged in planes perpendicular to one another, which have a spacing 39 from one another of 80 mm to 100 mm, in particular 90 mm.

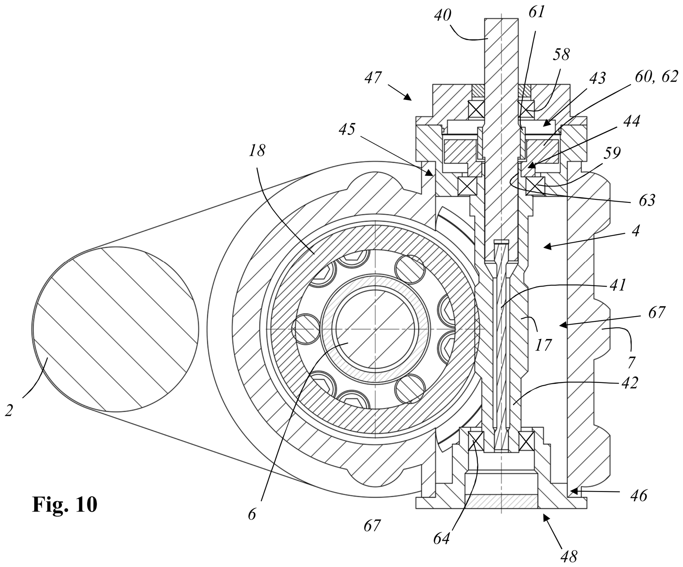

Fig. 10 shows the second embodiment of a steering system 1 according to the invention in a further sectional view.

It can be seen in Fig. 10 that the steering gear input shaft 4 comprises an input section 40 designed as a solid shaft, a middle section 41 designed as a solid shaft, and a hollow shaft section 42 which, in one section, forms the first helically toothed gear 17.

The middle section 41 is directly non-rotatably connected at one end to the input section 40 and at the other end directly non-rotatably to the hollow shaft section 42, wherein the hollow shaft section 42 surrounds the middle section 41 and a portion of the input section 40.

The steering system 1 has a first rotary angle sensor 43 which detects the rotational position and the rotational speed of the input section 40 of the first steering gear input shaft 4. The steering system 1 further has a second rotary angle sensor 44 which detects the rotational position of the portion of the hollow shaft section 42 surrounding the input section 40 of the first steering gear input shaft 4. The first rotary angle sensor 43 comprises a first rotary angle sensor element 60 and a first coding element 61 cooperating contactlessly with the first rotary angle sensor element 60, for example in the form of a code disc, a toothed ring or a magnetic wheel. The second rotary angle sensor 44 comprises a second rotary angle sensor element 62 and a second coding element 63 cooperating contactlessly with the second rotary angle sensor element 62, for example in the form of a code disc, a toothed ring or a magnetic wheel, wherein the first rotary angle sensor element 60 and the second rotary angle sensor element 62 may advantageously be arranged jointly on the same carrier and/or in the same sensor housing. In the figure, the first rotary angle sensor element 60 and the second rotary angle sensor element 62 are shown only very schematically together as a hatched closed polygon.

The measurement signals of the first rotary angle sensor element 60 and of the second rotary angle sensor element 62 are transmitted to a (not shown) control device which controls the motor 2 taking the measurement signals into account. In this context, the control device can infer the current torque exerted on the first steering gear input shaft 4 by means of a (not shown) steering handle from the respective difference between the angle of rotation of the first rotary angle sensor element 60 and the angle of rotation of the second rotary angle sensor element 62. This is possible because the input section 40, on which the first coding element 61 is arranged, and the end of the hollow shaft section 42 directly connected to the middle section 41, on which the second coding element 63 is arranged, both belong to the first steering gear input shaft 4 but are located, in terms of the torque path, upstream and downstream of the worm wheel 66 of the worm gear 67. They therefore rotate relative to one another when torque is applied due to torsion, in particular of the comparatively thin middle section 41, wherein the angle of rotation difference increases with increasing torque exerted on the first steering gear input shaft 4 by means of the steering handle.

It may advantageously be provided that the control device controls the motor 2 at least as a function of the angle of rotation difference between the first rotary angle sensor element 60 and the second rotary angle sensor element 62.

The steering gear device housing 7 comprises an input shaft bearing receptacle 45 and a further input shaft bearing receptacle 46 which is arranged mirror-symmetrically with respect to a horizontal mirror plane relative to the first input shaft bearing receptacle. An input shaft bearing module 47 is arranged in the input shaft bearing receptacle 45 and comprises a first rolling bearing 58 and a second rolling bearing 59. The input section 40 is rotatably supported by means of the first rolling bearing 58. The end of the hollow shaft section 42 surrounding the input section 40 is rotatably supported by means of the second rolling bearing 59.

A further input shaft bearing module 48 is arranged in the further input shaft bearing receptacle 46 and comprises a rolling bearing 64. The end of the hollow shaft section 42 directly connected to the middle section 41 is rotatably supported by means of the rolling bearing 64.

The input shaft bearing module 47 and the further input shaft bearing module 48 serve in particular to securely rotatably support the first steering gear input shaft 4, wherein the first rotary angle sensor element 60 and the second rotary angle sensor element 62 are spatially integrated into the input shaft bearing module 47. The steering gear input shaft 4 projects outward through the opening of the input shaft bearing receptacle 45.

If, however, instead of the steering system 1, which may be designed for a left-hand-drive vehicle, a mirror-symmetrical steering system 11 for a right-hand-drive vehicle is to be manufactured, the steering gear device housing 7 can be used in such a way that the steering gear input shaft 4 projects outward from the steering gear device housing 7 through the opening of the further input shaft bearing receptacle 46, as illustrated in Figs. 13 to 15.

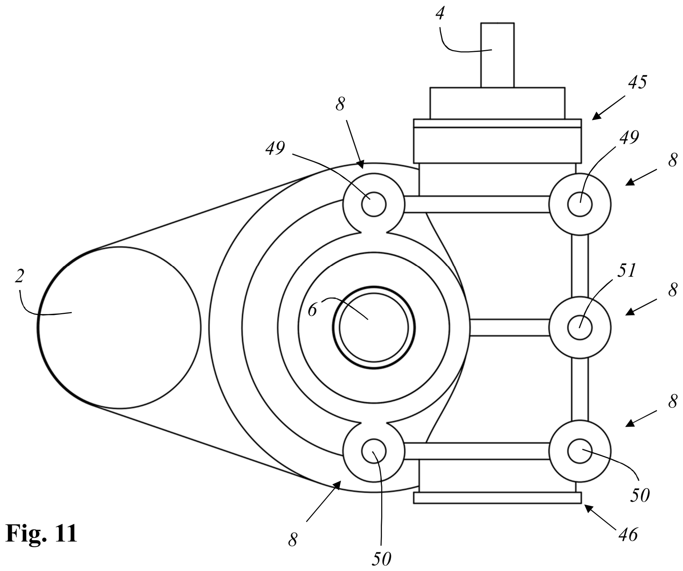

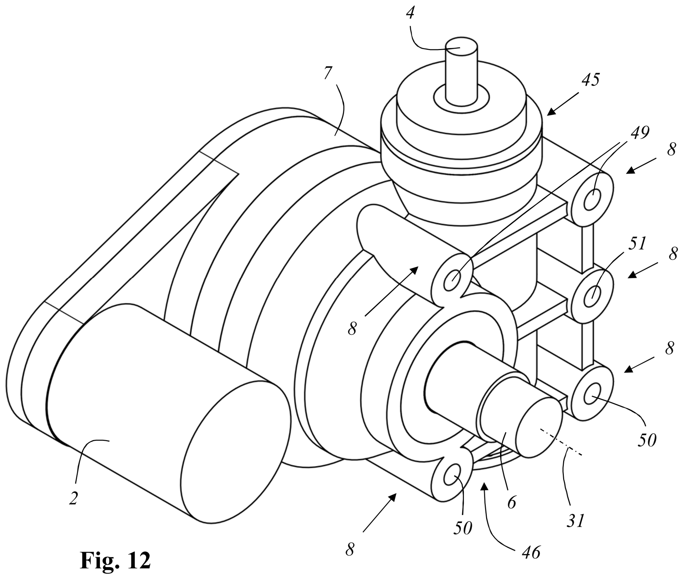

Fig. 11 shows the steering system 1 in a side view, while Fig. 12 shows the steering system 1 in a perspective view. In both figures, it can be seen that there are a total of five fastening elements 8, which may be designed as threaded bores.

There are two upper fastening elements 49, two lower fastening elements 50, and one central fastening element 51. The fastening elements 8 are arranged mirror-symmetrically with respect to a plane 52 in which the central axis of rotation 31 and the central fastening element 51 are arranged.

As illustrated by Figs. 13 to 15, the steering gear device housing 7 is designed such that, with this housing, a steering system 11 that is mirror-symmetrical to the steering system 1 with respect to a mirror plane 10, in particular a vertical mirror plane, with regard to the arrangement and orientation of the first steering gear input shaft 4 and the second steering gear input shaft 5, the steering gear output shaft 6 and the fastening elements 8, can be manufactured. While, in the steering system 1, the two upper fastening elements 49 are arranged at the top, in the mirror-symmetrical steering system 11 the two upper fastening elements 49 are arranged at the bottom. While, in the steering system 1, the two lower fastening elements 50 are arranged at the bottom, in the mirror-symmetrical steering system 11 the two lower fastening elements 50 are arranged at the top.

While the steering gear input shaft 4, in the steering system 1, projects outward through the opening of the input shaft bearing receptacle 45, the steering gear input shaft 4, in the mirror-symmetrical steering system 11, projects outward through the opening of the further input shaft bearing receptacle 46.

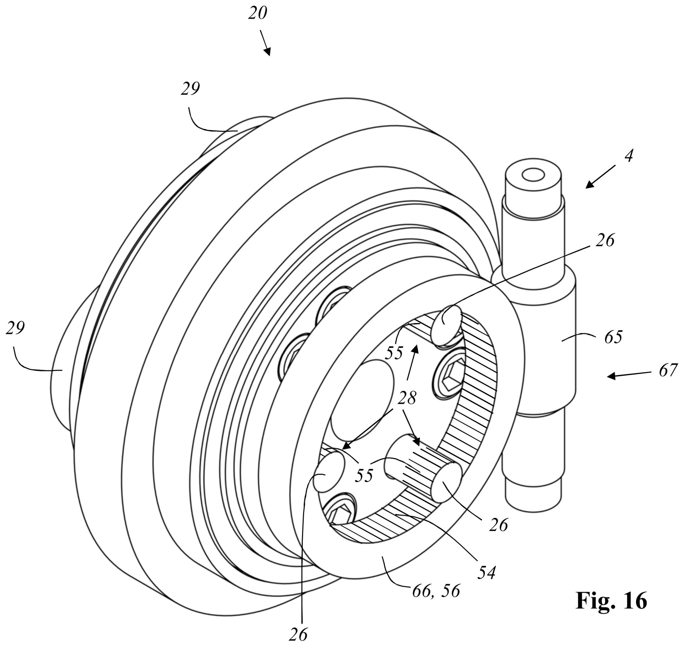

Fig. 16 shows a schematic detailed view of the worm gear 67 and the RV gear 20 of the second embodiment of a steering system according to the invention, wherein the external toothing of the worm wheel 66 and the thread of the worm shaft 65 are not illustrated for reasons of clarity.

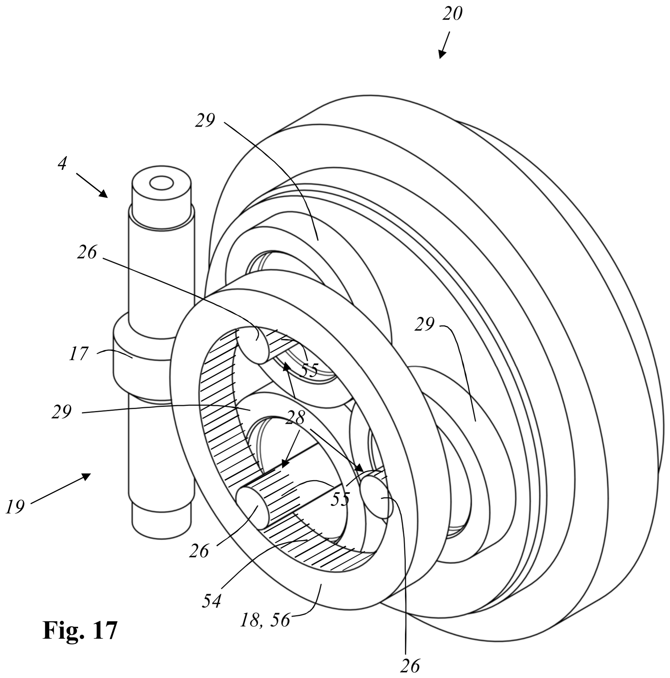

Fig. 17 shows a schematic detailed view of an embodiment of a combination of a crossed helical gear 19 and an RV gear 20 for a steering system according to the invention.

In contrast to the combination of a crossed helical gear 19 and an RV gear 20 illustrated in Fig. 8, the eccentric shaft gears 28 and the further eccentric shaft gears of each eccentric shaft are arranged on the same side of the two cycloidal discs 23, 24.

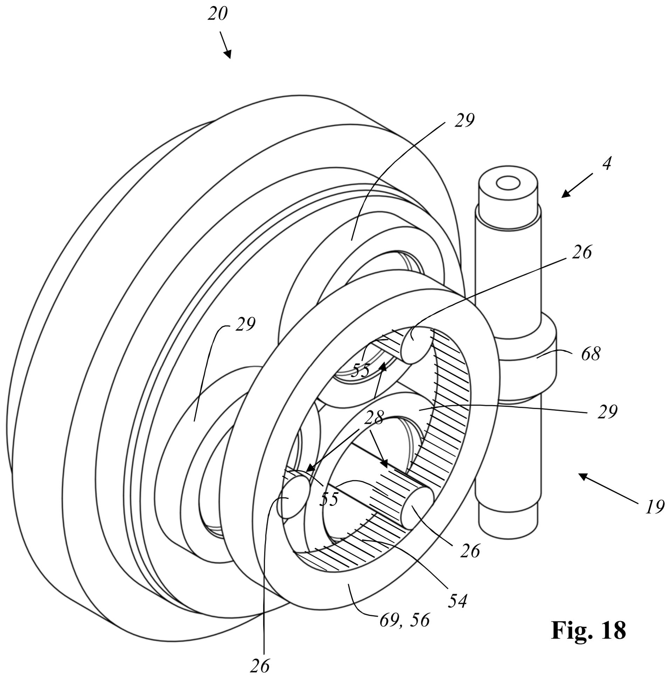

Fig. 18 shows a schematic detailed view of a further embodiment of a combination of a crossed helical gear 19 and an RV gear 20 for a mirror-symmetrical steering system 11 according to the invention, which is mirror-symmetrical to the steering system 1 at least with regard to the arrangement and orientation of the first steering gear input shaft 4 and the second steering gear input shaft 5, the steering gear output shaft 6 and the fastening elements 8, for which the combination according to Fig. 17 is designed.

The combination of a crossed helical gear 19 and an RV gear 20 illustrated in Fig. 18 is manufactured from the same components as the combination of a crossed helical gear 19 and an RV gear 20 illustrated in Fig. 17 and is mirror-symmetrical thereto, wherein, however, the first helically toothed gear 17 is replaced by an otherwise identical first helically toothed gear 68 having an opposite helix direction, and wherein the second helically toothed gear 18 is replaced by an otherwise identical second helically toothed gear 69 having an opposite helix direction.

The embodiment illustrated in Fig. 17 can be used, for example, for a left-hand-drive vehicle, while the mirror-symmetrical embodiment illustrated in Fig. 18 can be used for a right-hand-drive vehicle. However, depending on how the remaining part of the steering system and the connection of the steering system within the remaining steering components within the vehicle is configured, it is quite possible to use, for the right-hand-drive vehicle, a combination of a crossed helical gear 19 and an RV gear 20 as illustrated in Fig. 18 without replacing the helically toothed gears 17, 18 by otherwise identical helically toothed gears 68, 69 having an opposite helix direction. Such a mirror-symmetrical combination can be manufactured completely using the same steering system components as the embodiment illustrated in Fig. 17.

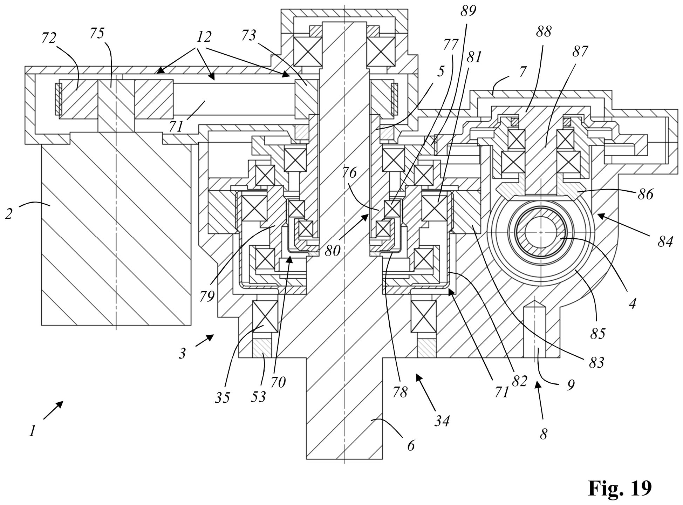

Fig. 19 shows a third embodiment of a steering system 1 according to the invention in a sectional view.

The steering system 1 consists of steering system components including an electric motor 2 and a steering gear device 3 having a first steering gear input shaft 4 couplable to a (not shown) steering shaft and a second steering gear input shaft 5 drivably coupled to the electric motor 2, and having a steering gear output shaft 6. The steering system components further include a steering gear device housing 7 which has a plurality of fastening elements 8 for fastening the steering gear device housing 7 to a higher-level structure, in particular a vehicle body. The fastening elements 8 of the steering gear device housing 7 may, for example, be designed as through-openings or as threaded bores 9 for fastening screws.

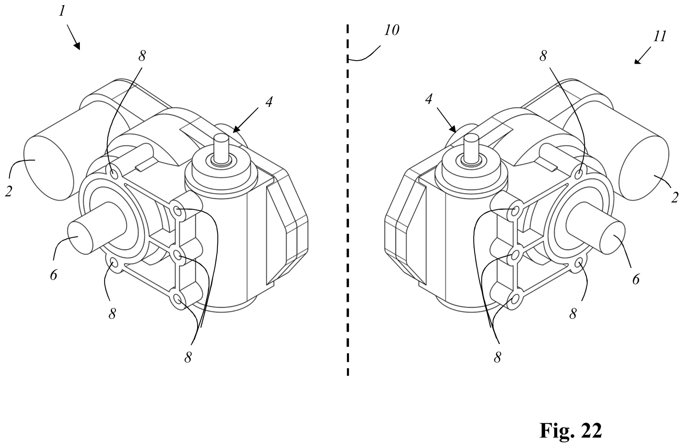

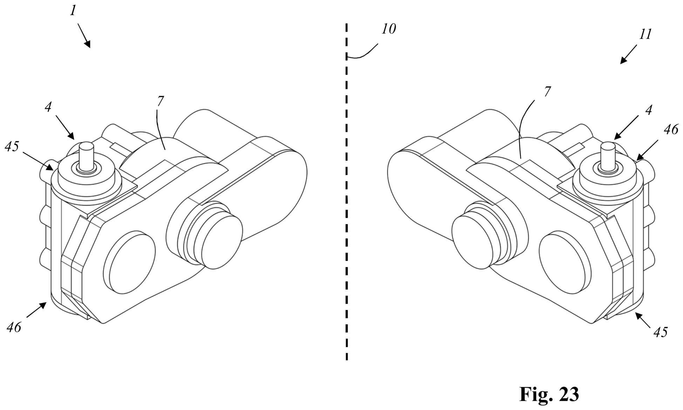

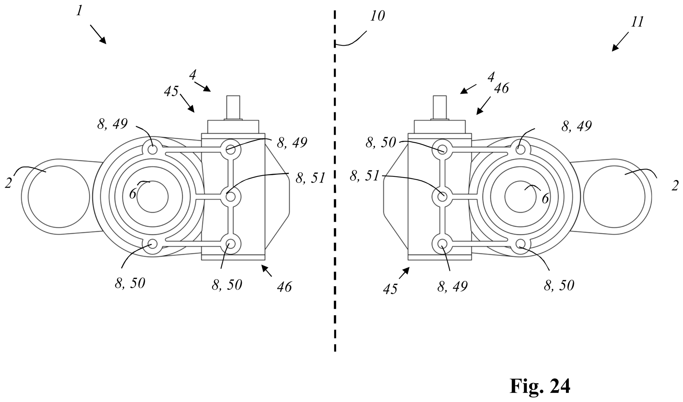

The steering gear device housing 7 is designed such that, with this housing, a steering system 11 that is mirror-symmetrical to the steering system 1 with respect to a mirror plane 10, in particular a vertical mirror plane, at least with regard to the arrangement and orientation of the first steering gear input shaft 4 and the second steering gear input shaft 5, the steering gear output shaft 6 and the fastening elements 8, can be manufactured, which is illustrated in Figs. 22 to 24 and explained in detail further below. Specifically, in this embodiment the steering system components are designed such that, with these components, a steering system 11 that is mirror-symmetrical to the steering system 1 with respect to the mirror plane 10 with regard to the arrangement and orientation of the first steering gear input shaft 4 and the second steering gear input shaft 5, the steering gear output shaft 6 and the fastening elements 8, can be manufactured.

The steering gear device 3 comprises, in the torque path from the motor 2 to the steering gear output shaft 6, a strain wave gear 70 and a further strain wave gear 71 which are drivably connected in series.

The motor 2 is coupled to the second steering gear input shaft 5 by means of a transmission gear device 12. The transmission gear device 12 is designed as a traction drive with a traction means 72, a first traction means carrier 73 and a second traction means carrier 74. The first traction means carrier 73 is directly non-rotatably connected to the output shaft 75 of the motor 2. The second traction means carrier 74 is non-rotatably connected to the second steering gear input shaft 5.

The second steering gear input shaft 5 is designed as a hollow shaft and has an oval section 76 which functions as a deformation body of the wave generator 80 of the strain wave gear 70, said deformation body being rotatably supported by means of a radially flexible rolling bearing 77. The oval section 76 presses the end of a cup-shaped flexspline 78 having an external toothing into an oval shape and into meshing engagement with the internal toothing of a circular spline 79 at two meshing positions. The oval section 76 together with the radially flexible rolling bearing 77 forms the wave generator 80 of the strain wave gear 70.

The circular spline 79 of the strain wave gear 70 is of oval design on its outer circumference and thus simultaneously functions as a deformation body of a further wave generator of the further strain wave gear 71, said deformation body being rotatably supported by means of a further radially flexible rolling bearing 81. The circular spline 79 presses the end of a further cup-shaped flexspline 82 having an external toothing into an oval shape and into meshing engagement with the internal toothing of a further circular spline 83 at at least two meshing positions, said further circular spline 83 being arranged non-rotatably relative to the steering gear device housing 7. The further cup-shaped flexspline 82 functions as the output of the further strain wave gear 71 and is non-rotatably connected to the steering gear output shaft 6.

The torque path from the first steering gear input shaft 4 to the steering gear output shaft 6 comprises a plurality of gear stages drivably connected in series. A first gear stage is designed as a bevel gear 90 having a crown wheel 91 and a pinion 92. The crown wheel 91 is non-rotatably connected to the steering gear input shaft 4. The pinion 92 is non-rotatably connected via a rotatably mounted shaft 93 to a bell-shaped externally toothed spur gear 94, the toothing of which is in meshing engagement with the toothing of a rotatably mounted further spur gear 95. The spur gear 94 and the further spur gear 95 form a further one of the gear stages. The further spur gear 95 is non-rotatably connected to the circular spline 79.

The steering gear device housing 7 comprises an output shaft bearing receptacle 34 in which a steering gear output shaft bearing 35 for rotationally supporting the steering gear output shaft 6 and a seal 53 are arranged.

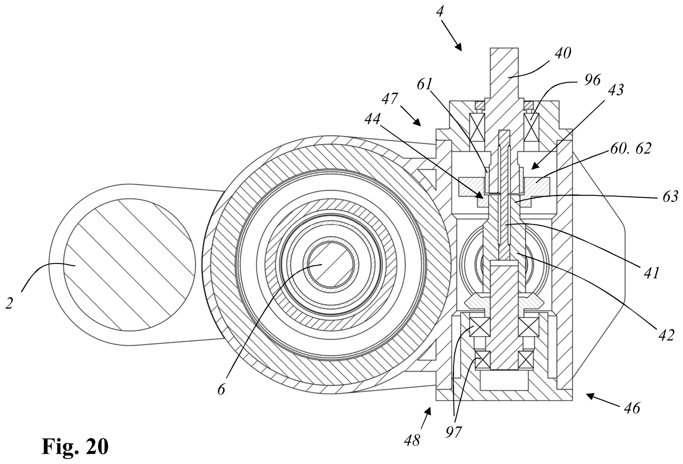

Fig. 20 shows the third embodiment of a steering system 1 according to the invention in a further sectional view.

It can be seen in Fig. 20 that the steering gear input shaft 4 comprises an input section 40 designed as a solid shaft, a middle section 41 designed as a solid shaft, and a hollow shaft section 42. The middle section 41 is directly non-rotatably connected at one end to the input section 40 and at the other end directly non-rotatably to the hollow shaft section 42, wherein the hollow shaft section 42 surrounds the middle section 41.

The steering system 1 has a first rotary angle sensor 43 which detects the rotational position and the rotational speed of the input section 40 of the first steering gear input shaft 4. The steering system 1 further has a second rotary angle sensor 44 which detects the rotational position of the portion of the hollow shaft section 42 surrounding the input section 40 of the first steering gear input shaft 4. The first rotary angle sensor 43 comprises a first rotary angle sensor element 60 and a first coding element 61 cooperating contactlessly with the first rotary angle sensor element 60, for example in the form of a code disc, a toothed ring or a magnetic wheel. The second rotary angle sensor 44 comprises a second rotary angle sensor element 62 and a second coding element 63 cooperating contactlessly with the second rotary angle sensor element 62, for example in the form of a code disc, a toothed ring or a magnetic wheel, wherein the first rotary angle sensor element 60 and the second rotary angle sensor element 62 may advantageously be arranged jointly on the same carrier and/or in the same sensor housing. In the figure, the first rotary angle sensor element 60 and the second rotary angle sensor element 62 are shown only very schematically together as a hatched closed polygon.

The measurement signals of the first rotary angle sensor element 60 and of the second rotary angle sensor element 62 are transmitted to a (not shown) control device which controls the motor 2 taking the measurement signals into account. In this context, the control device can infer the current torque exerted on the first steering gear input shaft 4 by means of a (not shown) steering handle from the respective difference between the angle of rotation of the first rotary angle sensor element 60 and the angle of rotation of the second rotary angle sensor element 62. This is possible because the input section 40, on which the first coding element 61 is arranged, and the end of the hollow shaft section 42 directly connected to the middle section 41, on which the second coding element 63 is arranged, both belong to the first steering gear input shaft 4 but are located, in terms of the torque path, upstream and downstream of the worm wheel 66 of the worm gear 67. They therefore rotate relative to one another when torque is applied due to torsion, in particular of the comparatively thin middle section 41, wherein the angle of rotation difference increases with increasing torque exerted on the first steering gear input shaft 4 by means of the steering handle.

It may advantageously be provided that the control device controls the motor 2 at least as a function of the angle of rotation difference between the first rotary angle sensor element 60 and the second rotary angle sensor element 62.

The steering gear device housing 7 comprises an input shaft bearing receptacle 45 and a further input shaft bearing receptacle 46, wherein the further input shaft bearing receptacle 46 is arranged mirror-symmetrically with respect to the input shaft bearing receptacle 45 relative to a horizontal mirror plane. An input shaft bearing module 47 is arranged in the input shaft bearing receptacle 45 and comprises a rolling bearing 96. The input section 40 is rotatably supported by means of the rolling bearing 96.

A further input shaft bearing module 48 is arranged in the further input shaft bearing receptacle 46 and comprises two rolling bearings 97 for supporting the steering gear input shaft 4.

The input shaft bearing module 47 and the further input shaft bearing module 48 serve in particular to securely rotatably support the first steering gear input shaft 4. The steering gear input shaft 4 projects outward through the opening of the input shaft bearing receptacle 45.

If, however, instead of the steering system 1, which may be designed, for example, for a left-hand-drive vehicle, a mirror-symmetrical steering system 11 for a right-hand-drive vehicle is to be manufactured, the steering gear device housing 7 can be used in such a way that the steering gear input shaft 4 projects outward from the steering gear device housing 7 through the opening of the further input shaft bearing receptacle 46, as illustrated in Figs. 22 to 24.

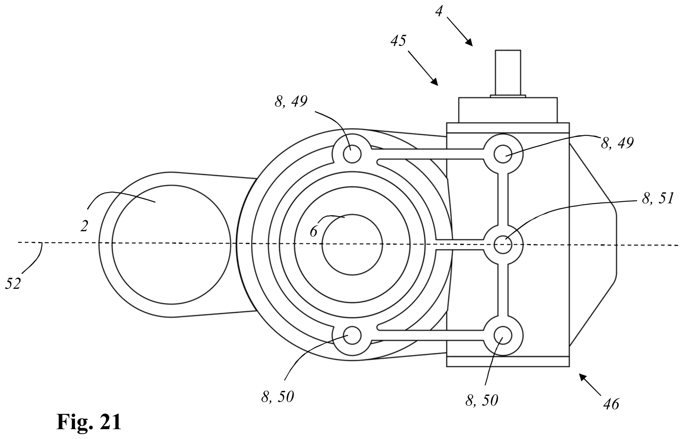

Fig. 21 shows the steering system 1 in a side view. It can be seen that there are a total of five fastening elements 8, which may be designed as threaded bores.

There are two upper fastening elements 49, two lower fastening elements 50, and one central fastening element 51. The fastening elements 8 are arranged mirror-symmetrically with respect to a plane 52 in which the central axis of rotation 31 and the central fastening element 51 are arranged.

As illustrated by Figs. 22 to 24, the steering gear device housing 7 is designed such that, with this housing, a steering system 11 that is mirror-symmetrical to the steering system 1 with respect to a mirror plane 10, in particular a vertical mirror plane, with regard to the arrangement and orientation of the first steering gear input shaft 4 and the second steering gear input shaft 5, the steering gear output shaft 6 and the fastening elements 8, can be manufactured. While, in the steering system 1, the two upper fastening elements 49 are arranged at the top, in the mirror-symmetrical steering system 11 the two upper fastening elements 49 are arranged at the bottom. While, in the steering system 1, the two lower fastening elements 50 are arranged at the bottom, in the mirror-symmetrical steering system 11 the two lower fastening elements 50 are arranged at the top.

While the steering gear input shaft 4, in the steering system 1, projects outward through the opening of the input shaft bearing receptacle 45, the steering gear input shaft 4, in the mirror-symmetrical steering system 11, projects outward through the opening of the further input shaft bearing receptacle 46.

### List of reference signs:

- 1: steering system
- 2: motor
- 3: steering gear device
- 4: first steering gear input shaft
- 5: second steering gear input shaft
- 6: steering gear output shaft
- 7: steering gear device housing
- 8: fastening elements
- 9: threaded bore
- 10: mirror plane
- 11: mirror-symmetrical steering system
- 12: transmission gear device
- 13: first spur gear
- 14: output shaft
- 15: second spur gear
- 16: third spur gear
- 17: first helically toothed gear
- 18: second helically toothed gear
- 19: crossed helical gear
- 20: RV gear
- 21: cycloidal gear
- 22: preceding stage
- 23: cycloidal disc
- 24: cycloidal disc
- 25: roller pin
- 26: eccentric shafts
- 27: rolling bearing
- 28: eccentric shaft gear
- 29: further eccentric shaft gear
- 30: external toothing
- 31: central axis of rotation
- 32: further rolling bearing
- 33: rolling bearing
- 34: output shaft bearing receptacle
- 35: steering gear output shaft bearing
- 36: distance
- 37: plane
- 38: plane
- 39: distance
- 40: input section
- 41: middle section
- 42: hollow shaft section
- 43: first rotary angle sensor
- 44: second rotary angle sensor
- 45: input shaft bearing receptacle
- 46: further input shaft bearing receptacle
- 47: steering gear input shaft bearing module
- 48: further steering gear input shaft bearing module
- 49: upper fastening element
- 50: lower fastening element
- 51: central fastening element
- 52: plane
- 53: seal
- 54: internal toothing
- 55: external toothing
- 56: intermediate gear
- 57: drive gear
- 58: first rolling bearing
- 59: second rolling bearing
- 60: first rotary angle sensor
- 61: second rotary angle sensor
- 62: first coding element
- 63: second coding element
- 64: rolling bearing
- 65: worm shaft
- 66: worm wheel
- 67: worm gear
- 68: first helically toothed gear with opposite helix direction
- 69: second helically toothed gear with opposite helix direction
- 70: strain wave gear
- 71: further strain wave gear
- 72: traction means
- 73: first traction means carrier
- 74: second traction means carrier
- 75: output shaft
- 76: oval section
- 77: radially flexible rolling bearing
- 78: flexspline
- 79: circular spline
- 80: wave generator
- 81: further radially flexible rolling bearing
- 82: 82 further flexspline
- 83: further circular spline
- 84: bevel gear
- 85: crown wheel
- 86: pinion
- 87: shaft
- 88: spur gear
- 89: further spur gear
- 90: bevel gear
- 91: crown wheel
- 92: pinion
- 93: shaft
- 94: spur gear
- 95: further spur gear
- 96: rolling bearing
- 97: rolling bearing

## Claims

1. Steering system consisting of steering system components, which include at least
• an electric motor, and
• a steering gear device having a first steering gear input shaft couplable to a steering shaft and a second steering gear input shaft drivably coupled to the electric motor, and having a steering gear output shaft, and
• a steering gear device housing which has fastening elements for fastening the steering gear device housing to a higher-level structure, in particular a vehicle body,
**characterized in that**
the steering gear device housing is designed such that, with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured.

2. Steering system according to claim 1, **characterized in that**
a. the torque path from the first steering gear input shaft to the steering gear output shaft comprises at least two gear stages drivably connected in series, or **in that**
b. the torque path from the first steering gear input shaft to the steering gear output shaft comprises at least two gear stages drivably connected in series, wherein at least one of the gear stages is designed as a strain wave gear or as a cycloidal gear or as an RV gear or as a bevel gear.

3. Steering system according to claim 1 or 2, **characterized in that** the steering system components are designed such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured.

4. Steering system according to claim 2, **characterized in that** at least one of the gear stages is designed as a worm gear or as a spindle gear or as a crossed helical gear, wherein the steering system components are designed such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured when all worms, spindles and helical gears are replaced by identical ones having an opposite helix direction.

5. Steering system according to one of claims 2 to 4, **characterized in that**
a. a first of the gear stages is designed as a bevel gear or as a worm gear or as a spindle gear or as a crossed helical gear or as a strain wave gear, and that a second gear stage drivably connected downstream of the first gear stage is designed as a cycloidal gear or as an RV gear or as a strain wave gear, and/or **in that**
b. the electric motor is coupled to the second steering gear input shaft by means of a transmission gear device, wherein the transmission gear device is in particular designed as a traction mechanism gear, a spur gear or a strain wave gear, or comprises a traction mechanism gear, a spur gear or a strain wave gear.

6. Steering system according to claim 5, **characterized in that** the motor
a. is arranged offset, in particular axis-parallel offset, relative to the second gear stage and/or relative to the steering gear output shaft, or
b. is arranged coaxially with the second gear stage.

7. Steering system according to one of claims 1 to 6, **characterized in that** the steering gear device housing has at least one of the following features a to c:
a. the steering gear device housing is of multi-part design,
b. the steering gear device housing accommodates at least the gear stages drivably connected in series,
c. the steering gear device housing accommodates the transmission gear device.

8. Steering system according to one of claims 1 to 7, **characterized in that**
a. the steering gear device housing, in particular in an opening of its housing wall, comprises at least one input shaft bearing receptacle for a steering gear input shaft bearing, or **in that**
b. the steering gear device housing, in particular in an opening of its housing wall, comprises at least one input shaft bearing receptacle for a steering gear input shaft bearing or with a steering gear input shaft bearing, wherein the steering gear device housing, in particular in a further opening of its housing wall, comprises at least one further input shaft bearing receptacle for a steering gear input shaft bearing, which is designed and arranged mirror-symmetrically to the input shaft bearing receptacle with respect to a mirror plane, in particular with respect to a horizontal mirror plane.

9. Steering system according to one of claims 1 to 8, **characterized in that**
a. the steering gear device housing, in particular in an opening of its housing wall, comprises at least one output shaft bearing receptacle for a steering gear output shaft bearing, or **in that**
b. the steering gear device housing, in particular in an opening of its housing wall, comprises at least one output shaft bearing receptacle for a steering gear output shaft bearing, wherein the distance of a plane perpendicular to the steering gear output shaft, in which the axis of rotation of the first steering gear input shaft is arranged, from the plane in which the portion of the outer side of the steering gear device housing directly surrounding the output shaft bearing receptacle is arranged, is greater than 70 mm, in particular lies in the range from 70 mm to 90 mm, in particular amounts to 80 mm, or **in that**
c. the steering gear device housing, in particular in an opening of its housing wall, comprises at least one output shaft bearing receptacle for a steering gear output shaft bearing, wherein the steering gear device housing, in particular in a further opening of its housing wall, comprises at least one further output shaft bearing receptacle for a steering gear output shaft bearing, which is designed and arranged mirror-symmetrically to the output shaft bearing receptacle with respect to a mirror plane, in particular with respect to a horizontal mirror plane, or **in that**
d. the steering gear device housing, in particular in an opening of its housing wall, comprises at least one output shaft bearing receptacle for a steering gear output shaft bearing, wherein the steering gear device housing, in particular in a further opening of its housing wall, comprises at least one further output shaft bearing receptacle for a steering gear output shaft bearing, which is designed and arranged mirror-symmetrically to the output shaft bearing receptacle with respect to a mirror plane, in particular with respect to a horizontal mirror plane, and wherein the distance of a plane perpendicular to the steering gear output shaft, in which the axis of rotation of the first steering gear input shaft is arranged, from the plane in which the portion of the outer side of the steering gear device housing directly surrounding the further output shaft bearing receptacle is arranged, is greater than 70 mm, in particular lies in the range from 70 mm to 90 mm, in particular amounts to 80 mm.

10. Steering system according to one of claims 1 to 9, **characterized in that** the steering system has at least one of the following features a to c:
a. the axes of rotation of the first steering gear input shaft and the steering gear output shaft are skewed relative to one another,
b. the axes of rotation of the first steering gear input shaft and the steering gear output shaft are arranged in planes perpendicular to one another,
c. the axes of rotation of the first steering gear input shaft and the steering gear output shaft have a spacing from one another in the range from 80 mm to 100 mm, in particular 90 mm.

11. Steering arrangement comprising a steering system according to one of claims 1 to 10 and a steering shaft which is operatively connected to a steering handle and coupled to the first steering gear input shaft.

12. Vehicle, in particular a commercial vehicle, very particularly a truck or a bus, comprising a steering system according to one of claims 1 to 10 or a steering arrangement according to claim 11.

13. Method for manufacturing a plurality of steering systems, in particular steering systems according to one of claims 1 to 10, comprising the following steps:
a. providing steering system components including
i. a plurality of identical electric motors, and
ii. a plurality of steering gear devices each having a first steering gear input shaft couplable to a steering shaft and a second steering gear input shaft drivably coupled or couplable to the electric motor, and having a steering gear output shaft, and
iii. a plurality of steering gear device housings each having fastening elements for fastening the steering gear device housing to a higher-level structure, in particular a vehicle body, wherein the steering gear device housings are designed such that, with each of these housings, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured,
b. assembling the steering system components such that, as a result, a plurality of steering systems for right-hand-drive vehicles and a plurality of steering systems for left-hand-drive vehicles are obtained.

14. Method according to claim 13, **characterized in that**
a. the steering systems for the left-hand-drive vehicles and the steering systems for the right-hand-drive vehicles are assembled, in particular completely, from identical steering system components, or **in that**
b. the steering systems for the left-hand-drive vehicles and the steering systems for the right-hand-drive vehicles are assembled from identical steering system components, with the exception that, if the steering system components include worms, spindles and/or helical gears, identical worms, spindles and helical gears having an opposite helix direction are used for the steering systems for the left-hand-drive vehicles on the one hand and for the steering systems for the right-hand-drive vehicles on the other hand.

15. Method according to claim 13 or 14, **characterized in that**
a. the steering gear device housings, in particular in an opening of their housing wall, each comprise an input shaft bearing receptacle for a steering gear input shaft bearing, and that for the steering systems for the left-hand-drive vehicles a steering gear input shaft bearing is inserted into the input shaft bearing receptacle, whereby the steering gear device housings, in particular in an opening of their housing wall, each comprise a further input shaft bearing receptacle for a steering gear input shaft bearing, and that for the steering systems for the right-hand-drive vehicles a steering gear input shaft bearing is inserted into the further input shaft bearing receptacle, and /or **in that**
b. the steering gear device housings, in particular in an opening of their housing wall, each comprise an output shaft bearing receptacle for a steering gear output shaft bearing, and that for the steering systems for the left-hand-drive vehicles a steering gear output shaft bearing is inserted into the output shaft bearing receptacle, whereby the steering gear device housings, in particular in an opening of their housing wall, each comprise a further output shaft bearing receptacle for a steering gear output shaft bearing, and that for the steering systems for the right-hand-drive vehicles a steering gear output shaft bearing is inserted into the further output shaft bearing receptacle.
